Europäisches Patentamt

European Patent Office

Office européen des brevets

(11) Veröffentlichungsnummer: **0 593 548 B1**

# (12) EUROPÄISCHE PATENTSCHRIFT

(45) Veröffentlichungstag der Patentschrift: **06.09.95**

(51) Int. Cl.⁶: **C04B 35/00**, C08L 83/04

(21) Anmeldenummer: **92913754.5**

(22) Anmeldetag: **30.06.92**

(86) Internationale Anmeldenummer:
**PCT/EP92/01466**

(87) Internationale Veröffentlichungsnummer:
**WO 93/01146 (21.01.93 93/03)**

(54) **THERMOPLASTISCHE FORMMASSEN, VERFAHREN ZU DEREN HERSTELLUNG UND VERFAHREN ZUR HERSTELLUNG VON FORMTEILEN AUS KERAMIK ODER METALL DURCH SINTERN.**

(30) Priorität: **10.07.91 DE 4122764**
**21.10.91 DE 4134694**
**15.04.92 DE 4212593**

(43) Veröffentlichungstag der Anmeldung:
**27.04.94 Patentblatt 94/17**

(45) Bekanntmachung des Hinweises auf die
Patenterteilung:
**06.09.95 Patentblatt 95/36**

(84) Benannte Vertragsstaaten:
**DE ES FR GB IT**

(56) Entgegenhaltungen:
**EP-A- 0 001 776**
**EP-A- 0 380 875**
**GB-A- 2 002 738**
**US-A- 3 090 691**

**GLASS AND CERAMICS Bd. 37, Nr. 1-2, Februar 1980, NEW YORK US Seiten 86 - 88 G.V.BATALOVA ET AL. 'CONDITIONS OF SHAPING CERAMICS WITH A POLYORGANO-SILOXANE BOND'**

(73) Patentinhaber: **BAYER AG**

**D-51368 Leverkusen (DE)**

(72) Erfinder: **HUGGINS, John**
**Christian-Hess-Strasse 73**
**D-5090 Leverkusen (DE)**
Erfinder: **WAGNER, Gebhard**
**Ackerstrasse 31**
**D-5068 Odenthal-Gloebusch (DE)**
Erfinder: **SCHLAK, Ottfried**
**Massliebchenweg 17**
**D-5000 Köln 80 (DE)**

## Beschreibung

Die vorliegende Erfindung betrifft neue thermoplastische Formmassen für die Herstellung von Formteilen aus Keramik oder Metall aus entsprechenden Keramik- oder Metallpulvern. Thermoplastische Formmassen finden unter anderem Anwendung bei Verfahren wie Spritzgießen, Extrudieren oder Warmpressen, bei denen ein temperaturabhängiges Fließverhalten notwendig ist.

Es ist bekannt, daß sinterfähige Keramik- oder Metallpulver zusammen mit thermoplastischen Bindemitteln und anderen Hilfsstoffen durch Spritzgießen, Extrudieren oder Warmpressen zu Formteilen verarbeitet werden können (F. Aldinger und H.-J- Kalz Angew. Chem. 99 (1987) 381-391; P. Glutz Feinwerktechnik & Messtechnik 97 (1989) (363-365); M.J. Edirisinghe, J.R.G. Evans: Inter. J. High Technology Ceramics 2 (1986) 1-31; W. Michaeli, R. Bieler; Ind.-Anz. 113 (1991) 12-14). Nach der Formgebung wird das Bindemittel bei Temperaturen zwischen 200 und 1000 °C aus dem Formteil (genannt Grünkörper) entfernt bzw. ausgebrannt.

Anschließend wird der Grünkörper in der Regel bei Temperaturen von mehr als 1000 °C gesintert, wobei eine teilweise oder vollständige Phasenumwandlung erfolgen kann und eine Verdichtung des Körpers stattfindet.

In der Regel werden rein organische Bindemittel bei diesen Verfahren eingesetzt. Beispiele sind Polystyrol, Polyethylen, Polypropylen, Polybutylacrylate sowie Paraffinwachse. Organische Bindemittel haben jedoch den Nachteil, daß das Ausbrennen langsam und mit großer Sorgfalt bei der Temperaturführung durchgeführt werden muss, da sonst Grünkörper mit groben Fehlern wie Rissen oder Poren erhalten werden, Zum Teil werden auch Grünkörper mit unzureichender Festikeit nach dem Ausbrennen erhalten, Eine ausreichende Festigkeit des Grünkörpers ist für die weitere Bearbeitung des Grünkörper sowie das fehlerfreie Sintern notwendig.

Siliconharze sind bereits mehrfach als Bindemittel für die Herstellung von Keramik beschrieben worden, Siliconharze haben den Vorteil, daß das Siliconharzbindemittel beim Ausbrennen in Keramik umgewandelt wird, so daß das Formteil schneller gebrannt werden kann, Jedoch sind die bisher beschriebenen Siliconharze für Verfahren, die eine thermoplastische Verarbeitung betreffen, wie zum Beispiel Spritzgießen, nicht geeignet.

Die US 3.090.691 beschreibt ein Verfahren zur Herstellung von Formteilen aus Keramik, das durch Brennen eines Gemisches aus einem Organosiloxan und einem Keramikpulver gekennzeichnet ist, Das Organosiloxan weist insgesammt 1 bis 3 organische Gruppen pro Siliziumatom auf, Die Mischungen werden bei 500 bis 1550 °C gebrannt und enthalten in der Regel einen Härtungskatalysator, wie zum Beispiel Bleioxid oder Bleistearat.

Die DE-A 2 142 581 beschreibt Massen für die Herstellung von Aluminiumoxidkeramik, die durch die Auswahl geeigneter anorganischer Zusatzkomponenten durch geringe Schwindung beim Sintern gekennzeichnet sind, Mehrere Bindemittel werden beschrieben, jedoch werden hitzehärtbare Siliconharze bevorzugt, Für die Formgebung durch Spritzgußverfahren wird als Bindemittel Polyethylen, Polyvinylchlorid oder ein Polyamid bevorzugt.

Die DE-A 2 106 128 und DE-A 2 211 723 beschreiben hitzehärtbare Formmassen aus anorganischen Feststoffen und losungsmittelfreien flüssigen Organsiloxanen, die organische Peroxide als Härtungskatalysatoren enthalten, Die Formmassen werden durch Pressen in eine Form gebracht und während des Preßvorgangs bei erhöhter Temperatur gehärtet. Die Grünkörper werden anschließend 2 bis 4 Stunden bei 200 °C nachgehärtet und dann über 32 Stunden bis 1510 °C zu fester Keramik gesintert.

Die US-A 4 888 376 und US-A 4 929 573 beschreiben ein Verfahren zur Herstellung von Siliziumcarbid-Formteilen mit hitzehärtbaren Polyorgansiloxanen als Bindemittel.

Die Polysiloxane sind bei Raumtemperatur hochviskos bis fest. Bei der Pyrolyse des Polysiloxans soll mindestens 0,2 Gew.-% freier Kohlenstoff, bezogen auf das Gewicht des Siliziumcarbidpulvers, entstehen. Die Polysiloxane nach diesen Verfahren besitzen Keramikausbeuten bei der Pyrolyse in Inertgas-Atmosphäre von lediglich 39 bis 50,8 Gew.-%.

Die beschriebenen Siliconharze haben einen oder mehrere Nachteile, die sie für thermoplastische Formgebungsverfahren ungeeignet machen. Viele der Siliconharze sind flüssig und müssen in der Form gehärtet werden, um eine ausreichende Festigkeit des Formteils zu bewirken. Das Härten in der Form führt zu langen Zykluszeiten und dadurch zu hohen Stückkosten. Feste Siliconharze, die bei höheren Temperaturen, d.h. Verarbeitungstemperaturen, nicht erweichen sind ebenfalls für die thermoplastische Verarbeitung nicht geeignet. Andere Siliconharze weisen nur geringe Keramikausbeuten bei der Pyrolyse bis 1000 °C auf. Eine hohe Keramikausbeute ist jedoch eine Voraussetzung für ein schnelles fehlerfreies Brennen. Hieraus resultiert der Wunsch der Technik nach Formmassen aus Keramik bzw. Metallpulvern und Bindemitteln, welche gute thermoplastische Verarbeitungseigenschaften besitzen und ohne zusätzliche Härtungsstufen in kurzer Zeit gebrannt werden können.

Es wurde nun gefunden, daß bestimmte Siliconharze ausgezeichnete thermoplastische Eigenschaften sowie hohe Keramikausbeuten bei der Pyrolyse bis 1000°C besitzen. Mit diesen Siliconharzen hergestellte thermoplastische Formmassen besitzen ausgezeichnete Eigenschaften in Bezug auf thermoplastische Verarbeitungsverfahren, insbesondere Spritzgießverfahren, und eventuelle mechanische Nachbearbeitungsverfahren und können nach der Formgebung innerhalb eines kurzen Zeitraums gebrannt werden.

Gegenstand der vorliegenden Erfindung ist eine thermoplastische Formmasse, enthaltend mindestens ein thermoplastisches Siliconharz mit einer Erweichungstemperatur zwischen 30 und 200°C der durchschnittlichen Formel

$$R^1_a \, Si(OH)_b(OR^2)_c O_{(4-a-b-c)/2} \qquad (I)$$

wobei
- a     Werte im Bereich von 0,95 bis 1,5 und
- c     Werte im Bereich von 0 bis 0,2 annimmt,

die Summe (a + b + c) 1,05 bis 1,7 beträgt,
die Summe (b + c) maximal 0,3 beträgt,
- $R^1$     einen oder mehrere der Reste H, $C_1$- bis $C_{18}$-Alkyl, Vinyl, Allyl oder Phenyl bezeichnet, und
- $R^2$     einen oder mehrere der organischen Reste $C_1$- bis $C_{18}$-Alkyl bezeichnet,

wobei mindestens 70% der Reste $R^1$ und $R^2$ Methylgruppen sind
und mindestens ein sinterfähiges Pulver.

In den erfindungsgemäßen thermoplastischen Formmassen beträgt bei dem thermoplastischen Siliconharz das durchschnittliche Molekulargewicht (arithmetrisches Mittel) der organischen Reste einschließlich der Alkoxyreste maximal 50 dividiert durch die Summe (a + c).

Der Wert von a soll insbesondere im Bereich zwischen 0,95 und 1,5 liegen, bevorzugt zwischen 1,0 und 1,5.

Der Wert c kann im Bereich von 0 bis 0,2, vorzugsweise im Bereich von 0,05 bis 0,15 liegen
- $R^1$     soll insbesondere Wasserstoff, Methyl, Vinyl und Phenyl bezeichnen, wobei Methyl und Phenyl bevorzugt sind.
- $R^2$     bezeichnet vorzugsweise eine $C_1$- bis $C_4$-Alkylgruppe.

Erfindungsgemäß werden die Siliconharze bevorzugt ohne Katalysatoren eingesetzt, so daß eine weitere Vernetzung und Härtung während des Formgebungsprozesses unterbleibt.

Zur Gewährleistung guter thermoplastischer Verarbeitungseigenschaften bei guter Festigkeit des Formkörpers kann ein Harz, das ein sehr steif vernetztes $SiO_{x/2}$-Netzwerk aufweist, d.h. durch eine Summe (a + b + c) nahe bei 1 charakterisiert ist, mehr höhermolekulare organische Reste enthalten, als ein weicheres $SiO_{x/2}$-Netzwerk, charakterisiert durch eine Summe (a + b + c) in der Nähe von 1,7, das einen demgegenüber erhöhten Anteil an Methylgruppen enthalten muß.

Zum Beispiel kann im Falle, daß die Summe (a + c) 1 beträgt, das mittlere Molekulargewicht aller $R^1$ und -$OR^2$ maximal 50 betragen. Im Falle, daß die Summe (a + c) 1,5 beträgt, soll das mittlere Molekulargewicht demgemäß maximal 50/1,5 = 33 betragen.

Bevorzugt sind Harze, bei denen das mittlere Molekulargewicht der Reste 40 dividiert durch (a + c), besonders bevorzugt 30 dividiert durch (a + c) beträgt.

Besonders bevorzugt sind Harze, die mindestens 70 %, vorzugsweise mindestens 80 % Methylgruppen neben Phenyl, $C_2$-$C_{18}$-Alkyl- und Vinylgruppen aufweisen.

Innerhalb der durch Formel (I) beschriebenen Harze sind die nachfolgenden Harze II und III besonders bevorzugt:

(II). "QM"-Harz, aufgebaut aus folgenden Struktureinheiten:
- a) 33 bis 70 Mol-% $SiO_2$-Einheiten,
- b) 0 bis 20 Mol-% $R^1SiO_{3/2}$-Einheiten,
- c) 0 bis 40 Mol-% $R^1(CH_3)SiO$ oder $Ph_2SiO$-Einheiten
- d) 20 bis 50 Mol-% $R^1(CH_3)_2SiO_{1/2}$-Einheiten     (IIA)

mit einem Alkoxygehalt nach Zeisel (A.L. Smith Analysis of Silicones", New York: Wiley, 1974, S. 155-156) von weniger als 20 % und durchschnittlich zwischen 1,0 und 1,5 organischen Substituenten (über Si-C-Bindung) pro Siliciumatom.

Darin bevorzugt sind Harze aufgebaut aus
- a) 40 bis 55 Mol-% $SiO_2$-Einheiten,
- b) 10 bis 35 Mol-% $Ph_2SiO$-, $Ph(CH_3)SiO$-, $(CH_2 = CH)(CH_3)SiO$-, oder $(CH_3)_2SiO$-Einheiten, und

c) 20 bis 40 Mol-% $R^1(CH_3)_2SiO_{1/2}$-Einheiten.     (IIC)

besonders bevorzugt

a) 50 bis 62,5 Mol-% $SiO_2$-Einheiten,

b) 0 bis 10 Mol-% $Ph_2SiO$-, $Ph(CH_3)SiO$-, $(CH_2=CH)(CH_3)SiO$-, oder $(CH_3)_2SiO$-Einheiten, und

c) 35 bis 45 Mol-% $R^1(CH_3)_2SiO_{1/2}$-Einheiten;     (IIB)

(III). "TM"-Harze, aufgebaut aus folgenden Struktureinheiten:

a) 50 bis 98 Mol-% $R^1SiO_{3/2}$-Einheiten, vorzugsweise

a1) 50 bis 95 Mol-% $CH_3SiO_{3/2}$-Einheiten und

a2) 0 bis 20 Mol-% $PhSiO_{3/2}$-Einheiten und/oder $ViSiO_{3/2}$-Einheiten,

b) 0 bis 30 Mol-% $Ph_2SiO$ oder $R^1(CH_3)SiO$-Einheiten, vorzugsweise

b1) 5 bis 30 Mol-% $(CH_3)_2SiO$-Einheiten und

b2) 0 bis 20 Mol-% $Ph_2SiO$-Einheiten und/oder $CH_3(R^1)SiO$-Einheiten,

c) 0 bis 33 Mol-% vorzugsweise

0 bis 5 Mol-% $SiO_2$-Einheiten,

und

d) 0 bis 10 Mol-% $R^1(CH_3)_2SiO_{1/2}$-Einheiten, vorzugsweise

0 bis 5 Mol-% $(CH_3)_3SiO_{1/2}$-Einheiten,     (IIIA)

mit durchschnittlich zwischen 1,0 und 1,5, vorzugsweise 1,05 und 1,3, organische Substituenten pro Siliziumatom. Die Summe aller trifunktionellen Einheiten a) und tetrafunktionellen Einheiten c) soll mindestens 70 Mol-% bezogen auf die Gesamtheit aller Einheiten betragen. Ganz besonders bevorzugt sind thermoplastische Siliconharze, die im wesentlichen aus

a1) 80 bis 98 Mol-% $CH_3SiO_{3/2}$-Einheiten,

a2) 0 bis 5 Mol-% $PhSiO_{3/2}$-Einheiten,

b) 0 bis 20 Mol-%, vorzugsweise bis 12 Mol-%, $(CH_3)_2SiO$-Einheiten,

und

d) 0 bis 10 Mol-%, vorzugsweise 2 bis 8 Mol-%, $(CH_3)_3SiO_{1/2}$-Einheiten,     (IIIB)

bestehen. Hieraus sind die $PhSiO_{3/2}$-freien Harze besonders bevorzugt.

Die erfindungsgemäßen thermoplastischen Siliconharze sollen bevorzugt Erweichungstemperaturen von 40 bis 200°C, insbesondere 40 bis 150°C und besonders bevorzugt 50 bis 120°C aufweisen, wenn nur ein Siliconharz in der thermoplastischen Formmasse eingesetzt wird.

Besonders vorteilhafte Eigenschaften weisen Mischungen von Siliconharzen unterschiedlicher Erweichungstemperatur auf. Zum Einsatz kommen ein "weiches" Harz mit einer Erweichungstemperatur von 30 bis 120°C, vorzugsweise 40 bis 100°C, in Mischung mit einem "harten" Harz mit einer Erweichungstemperatur von mindestens 60°C, wobei ein Unterschied in der Erweichungstemperatur von mindestens 20°C, insbesondere mindestens 30°C, bevorzugt ist.

Der Unterschied in der Erweichungstemperatur kann 100°C oder mehr betragen. Jedoch soll die Mischung als solche noch eine Erweichungstemperatur zwischen 40 und 200°C, vorzugsweise zwischen 40 und 150°C, aufweisen, auch wenn die darin enthaltene "harte" Komponente selbst eine höhere Erweichungstemperatur aufweist.

Die Erweichungstemperatur der Mischung ist durch die Erweichungstemperatur der Komponenten und dem Mengenverhältnis der Komponenten in der Mischung beeinflußt.

Mengenverhältnisse von "harter" zu "weicher" Komponente von 5 zu 95 Gew.-% bis 95 zu 5 Gew.-% werden erfindungsgemäß eingesetzt.

Als "weiches" Siliconharz ist ein Harz gemäß Formel (I) und (III-A) aus folgenden Struktureinheiten geeignet:

a) 75 bis 95 Mol-% $R^1SiO_{3/2}$-Einheiten,

b) 5 bis 20 Mol-% $R^1(CH_3)SiO$-Einheiten,

c) 0 bis 5 Mol-% $SiO_2$-Einheiten,

d) 0 bis 10 Mol-% $R^1(CH_3)_2SiO_{1/2}$-Einheiten.     (IIIC)

Als "harte" Siliconharz sind sowohl TM- als auch QM-Harze gemäß Formeln (I) und (IIIA) beziehungsweise (IIA) geeignet:

a) 85 bis 98 Mol-% $R^1SiO_{3/2}$-Einheiten

b) 0 bis 5 Mol-% $R^1(CH_3)SiO$-Einheiten

c) 2 bis 10 Mol-% $R^1(CH_3)_2SiO_{1/2}$-Einheiten     (IIID)

beziehungsweise

a) 55 bis 62,5 Mol-% $SiO_2$-Einheiten,

b) 0 bis 5 Mol-% $R^1(CH_3)SiO$-Einheiten

c) 33 bis 45 Mol-% $R^1(CH_3)_2SiO_{1/2}$-Einheiten (IID)

Siliconharzgemische mit viel hartem TM- oder QM-Harz weisen hohe Härte und niedrige Klebrigkeit im kalten Zustand auf, Formmassen aus solchen Siliconharzgemischen werden besonders bei der Herstellung von komplizierten und dünnwandigen Formteilen bevorzugt, wobei eine hohe Festigkeit erforderlich ist, um eine schadenfreie Entformung des Formteils zu gewährleisten, Die niedrige Klebrigkeit solcher Siliconharzgemische erleichtet auch die Entformung, so daß die Anwendung von Formtrennmitteln, wie Siliconölen, nicht notwendig wird.

Siliconharzgemische mit wenig hartem TM- oder QM-Harz weisen niedrigere Härte und höhere Elastizität im kalten Zustand auf, Formmassen aus solchen Siliconharzgemischen werden besonders bei der Herstellung von dickwandigen Formteilen bevorzugt, wobei beim Erstarren des Formteils in der Form große Spannungen entstehen können, Die Elastizität dieser Siliconharzgemische ermöglicht den Abbau der Spannungen beim Brennen und vermeidet dadurch Risse und andere Fehlstellen im gebrannten Teil.

Es wurde nun gefunden, daß geringe Anteile an erfindungsgemäßem harten TM- oder QM-Siliconharz eine erhebliche Verbesserung der Härte und insbesondere der Klebrigkeit der Formmassen bewirken, Für die meisten Formgebungsaufgaben sind daher 10 bis 50 Gew.-% des harten TM- oder QM-Siliconharzes ausreichend, um eine einfache Entformung des Formteils zu ermöglichen.

Die erfindungsgemäßen Siliconharze werden zum Beispiel durch Cohydrolyse eines entsprechenden Chlorsilan- oder Alkoxysilangemisches hergestellt, Ebenfalls kann ein Gemisch aus einem oder mehreren Alkoxysilanen und einem oder mehreren Siloxanen zuerst equilibriert und dann hydrolysiert werden, Die Hydrolyse wird nach den üblichen Methoden durchgeführt, wie in W. Noll <u>Chemie und Technologie der Silicone</u> (Weinheim: Verlag Chemie, 1968, s. 162-169) beschrieben ist. Zum Beispiel wird das Chlorsilangemisch zusammen mit einem organischen Lösungsmittel zu einem Überschuß an Wasser und ggf. einem aliphatisches Alkohol zugegeben. Die Phasen werden getrennt und die organische Phase neutral gewaschen. Das Siliconharz wird entweder als Lösung oder nach Abziehen des Lösungsmittels als Feststoff zur Herstellung der erfindungsgemäßen Formmassen eingesetzt.

Es ist bekannt, daß durch Kondensationsreaktionen der Alkoxy- und SiOH-Gehalt von Siliconharzen reduziert wird und dadurch ihre Erweichungstemperatur erhöht werden kann. Dieser Vorgang, oft Verdicken der Siliconharzlösung genannt, wird bevorzugt bei der Herstellung des Siliconharzes durch Erwärmen in Gegenwart von Katalysatoren durchgeführt. Die Herstellung der erfindungsgemäßen Siliconharze muß deswegen so durchgeführt werden, daß die gewünschte Erweichungstemperatur erhalten wird. Die Siliconharze müssen auch sorgfältig neutralisiert werden, um eine stabile Viskosität bei der Verarbeitung der Formmasse zu gewährleisten.

Die erfindungsgemäßen Siliconharze, bzw. Siliconharzgemische, sind im lösungsmittelfreien Zustand bei Raumtemperatur Feststoffe, die Erweichungstemperaturen zwischen 30 und 200 °C aufweisen. Oberhalb dieser Temperatur sind die Siliconharze oder Siliconharzgemische flüssig bis hochviskos. Vorzugsweise besitzt das Siliconharz oder Siliconharzgemisch eine Viskosität in der Schmelze von weniger als 100 000 mPa.s, vorzugsweise weniger als 10.000 mPa.s. Die Siliconharze sind im festen Zustand amorph. Daher ist die Temperatur bei der plastisches Fließen anfängt in der Regel nur ungenau bestimmbar. Die Erweichungstemperatur wird daher als ein Temperaturbereich über 10 bis 15 °C angegeben.

Die erfindungsgemäßen Siliconharze bzw. Siliconharzgemische sind durch hohe Keramikausbeuten bei der Pyrolyse bis 1000 °C von mehr als 60 Gew.-%, vorzugsweise mehr als 70 Gew.-%, gekennzeichnet. Die Keramikausbeute wird als der Rückstand in Gew.-% nach der Pyrolyse definiert. Die Keramikausbeute wird in der Regel mit steigenden Anteilen an $PhSiO_{3/2}$- und $Ph_2SiO$-Einheiten sowie Siloxyeinheiten mit langkettigen Alkylresten verschlechtert, daher soll die Summe dieser Einheiten 40 Mol-%, vorzugsweise 20 Mol-% nicht überschreiten.

Die erfindungsgemäßen thermoplastischen Formmassen bestehen in der allgemeinen Formulierung aus einem homogenen Gemisch von mindestens einem sinterfähigen Pulver aus Keramik oder Metall und mindestens einem thermoplastischen Siliconharz oder Siliconharzgemisch. Zusätzlich können die erfindungsgemäßen Formmassen andere Hilfsstoffe, wie Sinterhilfsmittel, Fließ- und Trennhilfsmittel enthalten.

In einer weiteren Ausführungsform der vorliegenden Erfindung können die thermoplastischen Formmassen zusätzlich zu dem Siliconharz weitere thermoplastische Bindemittel auf organischer Basis bzw. Copolymere organischer Polymerer mit Siloxanen enthalten. Bei der vorliegende Erfindung beruht der Vorteil des schnellen Brennens hauptsächlich auf dem gewählten Siliconharz. Jedoch können andere thermoplastische Polymere Eigenschaften der Formmasse bei der Formgebung verbessern, ohne die Brenndauer wesentlich zu verlängern.

Für die thermoplastischen Formmassen geeignet sind alle Pulver aus Metall oder Keramik, einschließlich mineralische Rohstoffe zur Herstellung von Keramik, die zu einem festen Körper gesintert werden können.

Erfindungsgemäß einsetzbare sinterfähige Pulver sind vorzugsweise aus Oxidkeramik oder nicht-oxidischer Keramik bzw. deren Rohstoffen, sowie Hartmetall, Sintermetall, legiertem Stahl oder reinem Metall.

Beispiele von bevorzugter Oxidkeramik sind $Al_2O_3$, MgO, $ZrO_2$, $Al_2TiO_5$, $BaTiO_3$, und Silikatkeramik bzw. deren Rohstoffe, wie Porzellan sowie Steinzeugmischungen, die unter anderem Ton, Feldspat und Quarz enthalten können. Beispiele von nicht-oxidischer Keramik sind SiC, $Si_3N_4$, BN, $B_4C$, AlN, TiN, und TiC unter anderen. Beispiele für sinterfähige Hartmetalle sind WC- bzw. TaC-Legierungen. Ein Beispiel für ein sinterfähiges Metall ist Silizium, das bei hohen Temperaturen mit Stickstoff zu Silziumnitrid umgesetzt werden kann, Die Pulver können allein oder auch als Gemisch verschiedener Pulver eingesetzt werden.

In allgemeinen werden je nach Keramik oder Metall unterschiedliche Sinterhilfsmittel zugesetzt, die durch Bildung von niedrig-schmelzenden Phasen die Phasenumwandlung bzw. Verdichtung beim Sintern bei niedrigeren Temperaturen beschleunigen. Diese Sinterhilfsmittel haben in der Regel keinen wesentlichen Einfluß auf die thermoplastischen Eigenschaften der Formmassen.

Die erfindungsgemäßen thermoplastischen Bindemittel auf organischer Basis sind organische Polymere und Wachse, die eine Erweichungstemperatur zwischen 40 und 200°C, vorzugsweise zwischen 40 und 160°C, besonders bevorzugt zwischen 70 und 130°C aufweisen. Beispiele sind Polyethylen, Polypropylen, Polystyrol, Polyacrylate, Polyester und Ethylen-Vinylacetat-Copolymere. Bevorzugt werden Polyethylen, Polypropylen und deren Copolymere, sowie Wachse auf Polymerbasis. Bevorzugt werden polare Polyolefinwachse sowie deren Gemische mit unpolaren thermoplastischen Polymeren, Auch bevorzugt werden neutrale und polare Wachse aus mineralischen oder natürlichen Vorkommen, wie Paraffinwachs, Montanwachs, Bienenwachs oder Pflanzenwachse und deren Folgeprodukte. Auch bevorzugt werden thermoplastische Copolymere organischer Polymere mit Polydimethylsiloxanen oder Siliconharzen eingesetzt. Beispiele sind Polyester-Siloxan-Copolymerisate, sogenannte Kombinationsharze. Ein oder mehrere Bindemittel können zusammen mit dem Siliconharz eingesetzt werden.

Die erfindungsgemäß einzusetzenden polaren Polyolefinwachse sind Wachse, die Säurezahlen nach DIN 53 402 zwischen 5 und 180 mg KOH/g aufweisen, Beispiele sind die Handelsprodukte Hostalub® H 22 und Hostamont® TP EK 581 der Firma Hoechst AG und die Polymeradditive A-C® 540 und A-C® 629 der Firma Allied-Corporation. Die polaren Polyolefinewachse können entweder niedrig-oder hochviskos in der Schmelze sein. Bevorzugt sind Wachse, die Viskositäten zwischen 10 und 200.000 mPa-s bei 140°C aufweisen.

Die erfindungsgemäßen thermoplastischen organischen Bindemittel und deren Copolymere mit Siloxanen werden in der Menge eingesetzt, die noch eine Verbesserung der Eigenschaften bei der Formgebung bzw. die Eigenschaften des Formteils bewirkt aber noch eine kurze Brennzeit erlauben. Wie vorher beschrieben wurde, müssen organische Thermoplaste beim Brennen vollständig aus dem Grünkörper entfernt werden, Deswegen haben zu große Anteile an organischen Bindemittel in der Formmasse einen negativen Einfluß auf die Brenndauer. Bevorzugt werden Formmassen, worin mindestens 10 Gew.-% der Summe aller Binder und Hilfsstofffe aus den erfindungsgemäßen Siliconharzen bestehen, Formmassen mit relativ wenig Siliconharz sind besonders geeignet für die Herstellung von Formteilen, worin der Keramikrückstand des Silicon harzes einen negativen Einfluß auf die Eigenschaften des Formteils haben kann, wie zum Beispiel Formteile aus nicht-oxidischer Keramik, Formmassen, worin mindestens 50 Gew.-% der Summe aller Binder und Hilfsstoffe aus Siliconharzen bestehen, werden bevorzugt eingesetzt, wenn eine möglichst kurze Brenndauer gewünscht ist.

Die erfindungsgemäßen thermoplastischen Formmassen enthalten in der Regel zusätzlich zu dem Siliconharz oder Siliconharzgemisch (und vorzugsweise dem thermoplastischen Polymeren) ein oder mehrere Fließhilfsmittel bzw. Trennhilfsmittel, die eine Erniedrigung der Viskosität der Formmasse bei der Formgebung sowie eine saubere und einfache Entformung gewahrleisten, Beispiele sind aliphatische Fettsäuren und deren Salze und Folgeprodukte, wie Stearinsäure, Kalziumstearat, Magnesiumstearat, Stearinalkohol, Stearinsäureamid, Stearinsäureethylester oder dergleichen, Öle, wie Polydimethylsiloxane, Polyethylenoxide, Polypropylenoxide, bzw. Copolymere aus Polydimethylsiloxan und Polyethylenoxid oder Polypropylenoxid und dergleichen oder niedermolekulare Wachse wie Paraffinwachs, Polyethylenoxidwachse oder Bienenwachs. Bevorzugt sind Formmassen, die 0,25 bis 10 Gew.-% (bezogen auf die Summe aller Bindemittel und Hilfsstoffe) Stearinsäure, deren Salze und Folgeprodukte oder Paraffinwachs enthalten. Im allgemeinen wird nur soviel Fließhilfsmittel zugegeben, wie notwendig ist, um die Viskosität bei der Formgebung in den gewünschten Bereich zu bringen.

Die erfindungsgemäßen thermoplastischen Formmassen enthalten mindestens soviel Siliconharz, thermoplastische organische Polymere und andere Hilfsstoffe, wie notwendig ist, um eine thermoplastisch verarbeitbare Masse zu erhalten, In der Regel müssen Bindemittel zusammen mit den anderen Hilfsstoffen mindestens das freie Volumen zwischen den Pulverpartikeln im Formteil ausfüllen. Je nach Pulverart sowie deren Kornform und Korngrößenverteilung sind dafür unterschiedliche Mengen notwendig. Erfahrungsgemäß sind 25 bis 60 Vol.-% Bindemittel notwendig. Bevorzugt sind Formmassen mit 50 bis 70 Vol.-% Pulver und 30 bis 50 Vol.-% Bindemittel und Hilfsstoffen, besonders bevorzugt sind Pulvergehalte von mindestens 60 Vol.-%.

Die erfindungsgemäßen thermoplastischen Formmassen sind bei Raumtemperatur fest, jedoch bei Temperaturen oberhalb der Erweichungstemperatur des eingesetzten Siliconharzes plastisch verformbar. In bevorzugter Ausführungsform weisen die Formmassen Viskositäten von weniger als 10.000 Pa.s bei der Verarbeitungstemperatur auf. Besonders bevorzugt sind Viskositäten zwischen 100 und 5.000 Pa.s.

Die erfindungsgemäßen thermoplastischen Formmassen werden durch Mischen der genannten Komponenten bei einer Temperatur oberhalb der Erweichungstemperatur des Siliconharzes hergestellt, wobei ggf. restliches Lösungsmittel aus der Siliconharzherstellung entfernt wird, Es ist vorteilhaft, beim Mischen hohe Scherkräfte anzuwenden, um Pulveraggregate zu zerkleinern und dadurch eine homogene Mischung zu erhalten, Geeignete Mischaggregate sind zum Beispiel Kneter, Doppelwellen-Extruder oder Walzwerke. Die Formmassen können dann entweder direkt verwendet werden oder zuerst zu Pulvern oder Granulaten verarbeitet werden.

Die erfindungsgemäßen thermoplastischen Formmassen besitzen ausgezeichnete Eigenschaften für die thermoplastische Formgebung, wie zum Beispiel durch Spritzgießen, Extrudieren oder Warmpressen. Die Formmassen können bei Temperaturen oberhalb des Erweichungstemperatur des Siliconharzes plastisch verarbeitet werden und unter Druck in Formen, deren Temperatur unterhalb der Erweichungstemperatur des Siliconharzes liegt, eingebracht werden. Durch Abkühlen wird die Formmasse wieder fest, Die dadurch entstandenen Grünteile besitzen gute Festigkeiten und können zum Beispiel durch Schleifen, Bohren oder Sägen bearbeitet oder nachbearbeitet werden, Reste aus der Formgebung können erneut eingesetzt werden.

Die erfindungsgemäßen thermoplastischen Formmassen sind besonders geeignet für die Herstellung von komplizierten Teilen durch Formgebungsverfahren wie das thermoplastische Spritzgießen. Die Formmassen besitzen gute Fließeigenschaften bei Temperaturen von mindestens 20°C über der Erweichungstemperatur des eingesetzten Siliconharzes. Die Formmassen können hohe Pulveranteile enthalten, Die aus den erfindungsgemäßen Formmassen hergestellten Grünkörper erleiden beim Brennen bis 1.000°C einen vergleichsweise nur geringen Gewichtsverlust. Die Grünkörper können daher in kurzer Zeit gebrannt werden, Die gebrannten Grünkörper besitzen hohe Festigkeiten und hohe Dichten.

Die aus den erfindungsgemäßen Formmassen hergestellten Grünkörper können entweder an der Luft oder in einer Inertgas-Atmosphäre oder im Vakuum innerhalb kurzer Zeit fehlerfrei gebrannt werden.

Das Brennen wird bevorzugt bei einem Temperatursteigerungsprogram von zwischen 0,1 bis 5°C/Min, vorzugsweise 0,5 bis 5°C/Min bis 600-1000°C durchgeführt. Formmassen auf Basis von Siliconharzgemischen vertragen Aufheiztemperaturen bis zu 10°C/Min. Es kann auch bei 0,1 bis 5°C/Min etappenweise bis zu einer Temperatur zwischen 200 und 800°C aufgeheizt werden, bei dieser Temperatur gehalten werden, gegebenenfalls so lange, bis keine Gewichtsänderung mehr zu beobachten ist und dann bei 5 bis 50°C/Min bis 1000°C aufgeheizt werden. Die gebrannten Grünkörper können dann je nach eingesetztem Pulver und Sinterhilfsmittel in der Regel bei Temperaturen zwischen 1000 und 2000°C gesintert werden.

Die Erfindung wird anhand der folgenden Beispiele weiter beschrieben.

Beispiele

Generell:

Die folgenden Substanzen wurden in den Beispielen eingesetzt:

| | |
|---|---|
| $Al_2O_3$-Pulver | der Firma Martinswerk GmbH mit der Bezeichnung Martinoxid ZPS-402 mit einer mittleren Teilchengrösse von 2,0-3,0 Mikron, einer Dichte von ca. 3,95 g/cm$^3$, einem Alpha-$Al_2O_3$-Gehalt von > 95 % und einem Glühverlust von ca. 0,2 Gew.-%, |
| Porzellanpulver | eine Rohstoffmischung zur Herstellung von Porzellan-Keramik, bestehend aus etwa 50 % Kaolin sowie etwa 50 % Feldspat und Quarz mit einer mittleren Korngröße von 4 bis 5 Mikron und einem Glühverlust von 6,1 %. |
| Hartparafin I | mit einer Erweichungstemperatur von 52-54°C, |
| Hartparafin II | mit einer Erweichungstemperatur von 90-94°C, |
| Polystyrol | des Typs Hostyren N 2000 der Firma Hoechst AG, |
| Polyethylenoxid | mit einer Viskosität von 160 mPa.s bei 25°C, |
| Polydimethylsilioxan | mit einer Viskosität von 5000 mPa.s bei 25°C, |

| Siloxan-Copolymer | eine 76 %-ige Lösung in Toluol eines Block-Copolymers aus (40:60) Polydimethylsiloxan und Polyethylenoxid mit einer mittleren Molmasse von 4230 g/mol. |
| Polares Polyolefinwachs | der Firma Hoechst AG mit der Bezeichnung Hostalub H 22 und einer Erweichungstemperatur von 103-108 °C, ein Säurezahl von 22-28 mg KOH/g, ein Verseifungszahl von 45-65 mg KOH/g und ein Viskosität von ca. 300 mPa-s bei 120 °C. |
| Montanwachs | der Firma Hoechst AG mit der Bezeichnung Hoechst-Wachs-E und einem Tropfpunkt von 79-85 °C, einer Säurezahl von 15-20 mg KOH/g, einer Verseifungszahl von 130-160 mg KOH/g, einer Dichte von 1,01 g/cm$^3$ und einer Viskosität bei 100 °C von etwa 30 mPa.s. |
| Copolymerwachs | ein Ethylen-Vinylacetat-Copolymer der Firma Allied-Corporation mit der Bezeichnung A-C Additive 400 und einem Vinylacetatgehalt von 13 %, einem Tropfpunkt von 95 °C, einer Dichte von 0,92 g/cm$^3$ und einer Viskosität bei 140 °C von etwa 600 mPa.s. |
| Dynasil 40 | ein Kieselsäureester der Firma Hüls Troisdorf AG der Formel $(EtO)_3 SiO(Si(OEt)_2 O)_n Si(OEt)_3$ (n = ca. 2,7 und Et = $CH_2 CH_3$) mit einem $SiO_2$-Gehalt von 40 Gew.-%. |

## Beispiel 1 (Siliconharz 1)

Herstellung eines Siliconharzes aus $CH_3 SiCl_3, (CH_3)_2 SiCl_2$ und $(CH_3)_3 SiCl$.

Ein Gemisch aus 880 g $CH_3 SiCl_3$, 90 g $(CH_3)_2 SiCl_2$ und 12 g $(CH_3)_3 SiCl$ wurde langsam zu einem gerührten Gemisch aus 3,8 l Wasser, 650 g Xylol und 650 g n-Butanol zugetropft. Die Wasser-Phase wurde abgetrennt und die Lösung dreimal mit Wasser gewaschen. Von der Harzlösung wurde dann Xylol-n-Butanol abdestilliert, um eine 80 %ige Lösung zu erhalten und dann mit Toluol verdünnt, um eine Harzlösung mit 64-Gew.-% Feststoff und einer Viskosität von 45 mPa-s bei 25 °C zu erhalten.

Das Siliconharz (1) ist in lösungsmittelfreiem Zustand ein Feststoff mit einer Erweichungstemperatur von 55 bis 65 °C, einer Viskosität bei 130 °C von 500 mPa.s und einer Dichte von 1,18 g/cm$^3$. $^1$H NMR (300 MHz, $CDCl_3$, ppm): δ 0,15 (s, $SiCH_3$, Int: 150), 0,90 (mult, $O(CH_2)_3 CH_3$, Int. 10), 1,35, 1,55 (mult, $OCH_2$-$(CH_2)_2 CH_3$, Int: 14), 2,3 (br, SiOH, Int: 0,9), 3,7 (mult, $OCH_2$, Int: 7). Nach $^{29}$Si-NMR enthält das Siliconharz 1,15 Methylgruppen pro Siliziumatom. Aus diesen Werten läßt sich ein Molekularformel von $(CH_3)_{1,15} Si(O-(CH_2)_3 CH_3)_{0,08}(OH)_{0,007} 0_{1,38}$ berechnen. Die Keramikausbeute nach der Pyrolyse bis 1000 °C (Aufheizgeschwindigkeit 1 °C/Min) an der Luft betrug 76 Gew.-%.

## Beispiel 2 (Siliconharz 2)

Herstellung des Siliconharzes aus $(CH_3) SiCl_3$ und $(CH_3)_3 SiCl$.

Wie in Beispiel 1 wurden 420 g (2,81 Mol) Methyltrichlorsilan und 24 g (0,22 Mol) Trimethylchlorsilan in 1,9 l Wasser, 335 g Xylol und 335 g n-Butanol hydrolysiert. Die Wasser-Phase wurde abgetrennt und die noch saure Lösung 30 Minuten bei 80 °C gerührt. Die Lösung wurde dreimal mit Wasser gewaschen. Von der Harzlösung wurde dann Xylol-Butanol abdestilliert um eine 77%ige Harzlösung zu erhalten,

Das Siliconharz (2) ist in lösungsmittelfreiem Zustand ein Feststoff mit einer Erweichungstemperatur von 70 bis 75 °C und einer Dichte von 1,13 g/cm$^3$. Nach $^{29}$Si-NMR enthält das Siliconharz 1,17 Methylgruppen pro Siliziumatom, Die Keramikausbeute nach der Pyrolyse bis 1.000 °C (Aufheizgeschwindigkeit 1 °C/Min) an der Luft betrug 74,2 Gew.-%.

## Beispiel 3 (Siliconharz 3)

Herstellung eines Siliconharzes aus $(CH_3) SiCl_3$ und $(CH_3)_3 SiCl$.

Wie in Beispiel 1 wurden 420 g (2,81 Mol) Methyltrichlorsilan und 12 g (0,11 Mol) Trimethylchlorsilan in 1,9 l Wasser, 335 g Xylol und 335 g n-Butanol hydrolysiert, Die Wasser-Phase wurde abgetrennt und die noch saure Lösung 30 Minuten bei 80 °C gerührt, neutral gewaschen und Xylol-Butanol abdestilliert um eine 75%ige Harzlösung zu erhalten.

Das Siliconharz (3) ist in lösungsmittelfreiem Zustand ein Feststoff mit einer Erweichungstemperatur von 80 bis 100°C und einer Dichte von 1,15 g/cm$^3$. $^1$H NMR (300 MHz, CDCl$_3$, ppm): $\delta$ 0,15 (s, SiCH$_3$, Int: 149), 0,90 (mult, O(CH$_2$)$_3$CH$_3$, Int. 6), 1,35, 1,50 (mult, OCH$_2$(CH$_2$)$_2$CH$_3$, Int. 8), 2,2 (br, SiOH, Int: 2,3), 3,7 (mult, OCH$_2$(CH$_2$)$_2$CH$_3$, Int: 4). Nach $^{29}$Si-NMR enthält das Siliconharz 1,08 Methylgruppen pro Siliziumatom. Aus diesen Werten läßt sich ein Molekularformel von (CH$_3$)$_{1,08}$Si(O(CH$_2$)$_3$CH$_3$)$_{0,043}$(OH)$_{0,017}$O$_{1,43}$ berechnen. Die Keramikausbeute nach der Pyrolyse bis 1000°C (Aufheizgeschwindigkeit 1°C/Min) an der Luft betrug 79,5 Gew.-%.

Beispiel 4 (Siliconharz 4)

Herstellung des QM-Siliconharzes

Ein Gemisch aus 1500 g (10,0 mol SiO$_2$) Dynasil 40, 600 g (7,4 mol Me$_3$SiO$_{1/2}$) Hexamethyldisiloxan, 2,4 g konz. H$_2$SiO$_4$, 1,2 g C$_4$F$_9$SO$_3$H und 1700 g Xylol wurde in einem 6 l Vierhalskolben mit Rührer, Wasserkühler, Thermometer und Tropftrichter vorgelegt. Die Mischung wurde zuerst 1 h am Rückfluß gekocht und dann bei einer Temperatur von 90 bis 100°C mit 263 g Wasser (ca. 20 % Überschuß) hydrolysiert. Anschließend wurde 2 h bei 100°C gerührt. Das Gemisch wurde mit 21,7 g (0,265 mol) Natriumacetat für 1 h bei 100°C neutralisiert. Dann wurden 1600 ml Xylol abdestilliert und das Produkt filtriert. Man erhält 1580 g einer 75%igen Lösung des Siliconharzes.

Das Siliconharz (4) ist in lösungsmittelfreiem Zustand ein Feststoff mit einer Erweichungstemperatur von 80 bis 100°C und einer Dichte von 1,20 g/cm$^3$, einem SiOH-Gehalt (Karl Fischer) von weniger als 0,01 % und einem Ethoxygehalt (Zeisel) von 11,5 %. $^1$H NMR (300 MHz, CDCl$_3$, ppm): $\delta$ 0,15 (s, SiCH$_3$, Int: 149,8), 1,20 (br. s, OCH$_2$CH$_3$, Int: 21,5), 3,80 (br. s, OCH$_2$CH$_3$, Int: 14,5). IR (KBr, cm$^{-1}$): 3450 (br, m), 2970 (sh, m), 2910 (sh, w), 1260 (sh, s), 1050-1200 (br, vs), 870 (sh, s), 850 (sh, s), 760 (sh, m). Aus diesen Werten läßt sich ein Molekularformel von (CH$_3$)$_{1,46}$Si(OCH$_2$CH$_3$)$_{0,21}$O$_{1,16}$ berechnen.

Die Keramikausbeute nach der Pyrolyse bis 1000°C (Aufheizgeschwindigkeit 2°C/Min) an der Luft betrug 75,3 %.

Beispiel 5 (Siliconharz 5)

Herstellung eines QM-Siliconharzes

Wie in Beispiel 4 wurden 1.542 g (10,28 mol SiO$_2$) Dynasil 40 und 583 g (7,2 mol Me$_3$SiO$_{1/2}$) Hexamethyldisiloxan mit 270 g Wasser hydrolysiert, mit Natriumacetat neutralisiert, konzentriert und filtriert. Man erhält 1.600 g einer 75%igen Lösung des Siliconharzes.

Das Siliconharz (5) ist in lösungsmittelfreiem Zustand ein Feststoff mit einer Erweichungstemperatur von 100 bis 110°C, einem SiOH-Gehalt (Karl Fischer) von weniger als 0,01 % und einem Ethoxygehalt (Zeisel) von 11,8 %. $^1$H NMR (300 MHz, CDCl$_3$, ppm): $\delta$ 0,15 (s, SiCH$_3$, Int: 149,2), 1,20 (br. s, OCH$_2$CH$_3$, Int: 21), 3,80 (br. s, OCH$_2$CH$_3$, Int: 14,5). IR (KBr, cm$^{-1}$): 3450 (br, m), 2970 (sh, m), 2910 (sh, w), 1260 (sh, s), 1050-1200 (br, vs), 870 (sh, s), 850 (sh, s), 760 (sh, m). Aus diesen Werten läßt sich eine Summenformel von (CH$_3$)$_{1,45}$Si(OEt)$_{0,20}$O$_{1,17}$ berechnen.

Die Keramikausbeute nach der Pyrolyse bis 1.000°C (Aufheizgeschwindigkeit 2°C/Min) an der Luft betrug 76,7 %.

Beispiel 6 (Siliconharz 6)

Herstellung eines QM-Siliconharzes

Wie in Beispiel 4 wurden 1.154 g (7,69 mal SiO$_2$) Dynasil 40, 311,5 g (3,85 mol Me$_3$SiO$_{1/2}$) Hexamethyldisiloxan und 428 g (5,77 mol Me$_2$SiO) Octamethylcyclatetrasiloxan mit 202 g Wasser hydrolysiert, mit Natriumacetat neutralisiert, konzentriert und filtriert. Man erhält 1.300 g einer 54%igen Lösung des Siliconharzes.

Das Siliconharz (6) ist in lösungsmittelfreiem Zustand ein Feststoff mit einer Erweichungstemperatur von 80 bis 90°C, einem SiOH-Gehalt (Karl Fischer) von weniger als 0,01 % und einem Ethoxygehalt (Zeisel) von 8,3 %. $^1$H NMR (300 MHz, CDCl$_3$, ppm): $\delta$ 0,15 (s, SiCH$_3$, Int: 147,9), 1,20 (br. s, OCH$_2$CH$_3$, Int: 15,3) 3,80 (br. s. OCH$_2$CH$_3$, Int: 11). IR (Film, cm$^{-1}$): 2.970 (br, m), 2.905 (sh, w), 1.400-1.450 (br, w), 1.265 (sh, s), 1.050 bis 1.200 (br, vs), 850 (sh, s), 810 (sh, s), 760 (sh, m).

Die Keramikausbeute nach der Pyrolyse bis 1.000 °C (Aufheizgeschwindigkeit 2 °C/Min) an der Luft betrug 76,5 %.

Beispiel 7 (Siliconharz 7)

Herstellung eines QM-Siliconharzes

Wie in Beispiel 4 wurden 1500 g (10,0 mal $SiO_2$) Dynasil 40 und 516 g (6,4 mol $Me_3SiO_{1/2}$) Hexamethyldisiloxan mit 290 g Wasser hydrolysiert, mit Natriumacetat neutralisiert, konzentriert und filtriert. Man erhält 1600 g einer 75%igen Lösung des Siliconharzes.

Das Siliconharz (7) ist in lösungsmittelfreiem Zustand ein Feststoff mit einer Erweichungstemperatur von 220 °C, einem SiOH-Gehalt (Karl Fischer) von weniger als 0,01 % und einem Ethoxygehalt (Zeisel) von 12,5 %. $^1$H NMR (300 MHz, $CDCl_3$, ppm): δ 0,15 (s, $SiCH_3$, Int: 149,2), 1,20 (br. s, $OCH_2CH_3$, Int: 27) 3,80 (br. s. $OCH_2CH_3$, Int: 18). IR (KBr, $cm^{-1}$): 3.450 (br, m), 2.970 (sh, m), 2.910 (sh, w), 1260 (sh, s), 1.050-1.200 (br, vs), 870 (sh, s), 850 (sh, s), 760 (sh, m). Aus Diesen Werten läßt sich ein Molekularformel von $(CH_3)_{1,16}Si(OCH_2CH_3)_{0,21}O_{1,31}$ berechnen.

Die Keramikausbeute nach der Pyrolyse bis 1000 °C (Aufheizgeschwindigkeit 2 °C/Min) an der Luft betrug 78,7 %.

Beispiel 8 (Formmasse aus Siliconharz 1)

In einem Zwei-Wellen-Kneter wurden 395 g $Al_2O_3$-Pulver, 100 g der obigen 64%igen Harzlösung aus Beispiel 1 (64 g Harz), 4 g Calciumstearat und 8 g Polyethylenoxid vorgelegt. Die Mischung wurde bei 110 °C und Unterdruck für 15 Minuten geknetet, um das Lösungsmittel zu entfernen. Die Masse wurde dann weitere 15 Minuten ohne Vakuum geknetet. Es entstand eine plastische Formmasse mit guten Fließeigenschaften, die beim Abkühlen fest wurde, Der $Al_2O_3$-Volumenanteil der Formmasse berechnet sich zu etwa 61,5 %.

Die Formmasse wurde bei etwa 120 °C und 500 bar zu Pillen gepreßt. Eine 13 x 2,0 mm große Pille wurde bei einem stufenweisen Aufheizprogramm (25-150 °C/25 Min; 150-400 °C/250 Min; 400-600 °C/65 Min; 600-1000 °C/20 Min) über 6,0 h bis 1000 °C an der Luft gebrannt. Die gebrannte Pille war von hoher Festigkeit und frei von makroskopischen Fehlern. Der Gewichtsverlust beim Brennen betrug 5,5 %.

Beispiele 9-13

Verschiedene Formmassen wurde wie im Beispiel 8 aus $Al_2O_3$-Pulver und der Siliconharzlösung 1 in einem Kneter hergestellt. Die Zusammensetzungen dieser Formmassen sind in Tabelle 1 aufgeführt. Die Formmassen wurden zu Pillen gepreßt und an der Luft gebrannt, Tabelle 2.

Tabelle 1

| Zusammensetzung der Formmassen | | | | | |
|---|---|---|---|---|---|
| Nr. | Temp. °C | $Al_2O_3$ g | Harzlösung g | Ca-Stearat g | Sonstiges |
| 9 | 105 | 415 | 94 | 5 | 8 g Hartparaffin I |
| 10 | 105 | 435 | 100 | 5 | 2 g Polyethylenoxid |
| 11 | 105 | 415 | 100 | 5 | 8 g Siloxan-Copolymer |
| 12 | 130 | 415 | 86 | 5 | 9 g Hartparaffin I 8,5 g Polystyrol |
| 13 | 120 | 375 | 100 | | 9 g polares Polyolefinwachs |

[a]Kneter-Temperatur

Tabelle 2

| | Ergebnisse des Brennens[a] | | | | | |
|---|---|---|---|---|---|---|
| Nr. | Größe mm | Temp.-Programm | Brenndauer h | Gew.-% -Verlust | Aussehen |
| 8 | 10 x 4,5 | 1 °C/Min bis 1000 °C | 16,25 | 5,1 | fehlerfrei |
| 9 | 13 x 2,5 | 1 °C/Min bis 1000 °C | 16,25 | 5,9 | fehlerfrei |
| 10 | 13 x 2,5 | 1 °C/Min bis 1000 °C | 16,25 | 4,2 | fehlerfrei |
| 11 | 13 x 2,5 | 25-150 °C/25 Min, 150-400 °C/250 Min, 400-600 °C/65 Min, 600-1000 °C/20 Min | 6,0 | 3,5 | fehlerfrei |
| 12 | 13 x 2,5 | 1 °C/Min bis 1000 °C | 16,25 | 7,1 | fehlerfrei |
| 13 | 13 x 2 | 1 °C/Min bis 1000 °C | | 5,5 | fehlerfrei |

[a]Kneter-Temperatur

### Beispiel 14 (Formmasse aus Siliconharz 2)

In einem Kneter wurden 32,5 g (25 g Harz) Siliconharzlösung 2, 22,5 g Montanwachs und 2,5 g Stearinsäureamid vorgelegt und auf 120 °C aufgeheizt, Dann wurden 222,5 g $Al_2O_3$-Pulver eingemischt und durch $N_2$-Spülung das Lösungsmittel entfernt, Weitere 85 g $Al_2O_3$- Pulver wurden nach und nach eingearbeitet, Die Masse wurde dann weitere 60 Min geknetet. Es entstand eine plastische Formmasse mit guten Fließeigenschaften, die beim Abkühlen fest wurde. Der $Al_2O_3$-Volumenanteil der Formmasse berechnet sich zu etwa 62,3 %.

Die Formmasse wurde bei etwa 120 °C zu Pillen gepreßt. Eine 13 x 2,0 mm große Pille wurde bei einem Aufheizprogramm von 1 °C/Min bis 1.000 °C an der Luft gebrannt. Die gebrannte Pille war von hoher Festigkeit und frei von makroskopischen Fehlern, Der Gewichtsverlust beim Brennen betrug 8,4 %.

### Beispiel 15 (Formmasse aus Siliconharz 4)

In einem Kneter wurden 41,7 g (25 g Harz) einer 60%igen Siliconharzlösung aus Beispiel 4, 24,5 g Montanwachs und 0,5 g Natriumstearat vorgelegt und 5 Min bei 120 °C vermischt. Dann wurden 220 g $Al_2O_3$-Pulver zugegeben und die Masse 30 Minuten mit ständiger $N_2$-Spülung geknetet um das Xylol abdampfen zu lassen, Die Masse wurden 117 g weiteres $Al_2O_3$-Pulver portionsweise zugegeben und insgesamt 1 h geknetet. Man erhält eine plastische Formmasse mit guten Fließeigenschaften, die beim Abkühlen fest wurde. Der $Al_2O_3$-Volumenanteil der Formmasse berechnet sich zu etwa 64,9 %.

Die Formmasse wurde bei etwa 120 °C und 100 bar zu Pillen gepreßt. Eine 13 x 2,0 mm große Pille wurde bei einem Aufheizprogramm von 1 °C/Min bis 100 °C, 0,5 °C/Min bis 400 °C, 1 °C/Min bis 600 °C und 5 °C/Min bis 1.000 °C an der Luft gebrannt. Die gebrannte Pille war von hoher Festigkeit und frei von makroskopischen Fehlern. Der Gewichtsverlust beim Brennen betrug 9,0 %.

### Beispiel 16 bis 19

Verschiedene Formmassen wurden wie in Beispiel 15 aus $Al_2O_3$-Pulver, Siliconharz und Hilfsstoffen in einem Kneter hergestellt. Die Zusammensetzungen dieser Formmassen sind in Tabelle 3 aufgeführt. Die Formmassen wurden zu Pillen gepreßt und an der Luft gebrannt, Tabelle 4.

EP 0 593 548 B1

Tabelle 3

| Zusammensetzung der Formmassen | | | | |
|---|---|---|---|---|
| Nr. | Al$_2$O$_3$ g | Siliconharz | | Sonstiges |
| | | Nr. | g | |
| 16 | 328 | 4 | 35 | 10 g Montanwachs<br>5 g Stearinsäureamid |
| 17 | 246 | 4 | 35 | 5 g Copolymerwachs<br>5 g Paraffin II<br>5 g Stearinsäureamid |
| 18 | 311 | 5 | 35 | 5 g Paraffin II<br>9,5 g Montanwachs<br>0,5 g Natriumstearat |
| 19 | 252 | 6 | 35 | 5 g Copolymerwachs<br>9,5 g Montanwachs<br>0,5 g Natriumstearat |

Tabelle 4

| Ergebnisse des Brennens | | | | |
|---|---|---|---|---|
| Nr. | Größe mm | Brenndauer[a] h | Gew.-% -Verlust | Aussehen |
| 15 | 13 x 2 | 16:20 | 9,0 | fehlerfrei |
| 16 | 13 x 2 | 16:20 | 6,8 | fehlerfrei |
| 17 | 13 x 2 | 16:20 | 8,3 | fehlerfrei |
| 18 | 13 x 2 | 16:20 | 7,0 | fehlerfrei |
| 19 | 13 x 2 | 16:20 | 8,3 | fehlerfrei |

[a]Aufheizprogramm: 1 °C/Min 25-100 °C, 0,5 °C/Min 100-400 °C, 1 °C/Min 400-600 °C und 5 °C/Min 600-1.000 °C.

Beispiel 20

Gemäß Tabelle 5 wurden jeweils ein weiches und ein hartes Harz gemischt, um die Eigenschaften der Mischung zu zeigen.

Beispiel 21

Herstellung einer Formmasse aus dem Gemisch von Siliconharz (1) und (3)

In einem Kneter wurden 39,1 g (25 g Harz) einer 64%igen Harzlösung aus Beispiel 1, 6,0 g (5,25 g Harz) einer 88%igen Harzlösung aus Beispiel 2, 12,5 g Montanwachs und 2,5 g Stearinsäureamid vorgelegt und 5 Minuten bei 120 °C vermischt. Dann wurden 200 g Al$_2$O$_3$- Pulver zugegeben und die Masse 30 Minuten mit ständiger N$_2$-Spülung geknetet, um das Lösungsmittel abgedampfen zu lassen, Zu der Masse wurden weitere 76 g Al$_2$O$_3$-Pulver portionsweise zugegeben und insgesamt 1 h geknetet. Man erhält eine plastische Formmasse mit guten Fließeigenschaften, die beim Abkühlen fest wird.

Die Formmasse wurde bei etwa 120 °C und 100 bar zu Pillen gepreßt. Die Pillen ließen sich leicht entformen und waren von hoher Festigkeit. Eine 13 x 2,0 mm große Pille wurde bei einem Aufheizprogramm von 1 °C/Min bis 100 °C, 0,5 °C/Min bis 400 °C, 1 °C/Min bis 600 °C und 5 °C/Min bis 1000 °C an der Luft gebrannt. Die gebrannte Pille war von hoher Festigkeit und frei von makroskopischen Fehlern, Der Gewichtsverlust beim Brennen betrug 7,2 %.

Beispiele 22-26

Verschiedene Formmassen wurden wie im Beispiel 21 aus $Al_2O_3$-Pulver und verschiedenen Siliconharzmischungen in einem Kneter hergestellt. Die Zusammensetzungen dieser Formmassen sind in Tabelle 6 aufgeführt. Die Formmassen wurden bei etwa 120°C zu Pillen gepreßt, Die Formmassen konnten leicht entformt werden und klebten nicht an den Formwänden, Die gepressten Formmassen waren von unterschiedlicher Härte, Mit zunehmendem Anteil an den Siliconharzen (3), (4) und (7) wurden die gepressten Formmassen härter und mehr spröde, Die gepressten Formmassen konten in kurzer Zeit fehlerfrei gebrannt werden, Tabelle 7.

Tabelle 5

| Eigenschaften der Siliconharzmischungen | | | | | |
|---|---|---|---|---|---|
| Harz 1 (Bsp.1) | hartes Bsp.Nr. | Harz Gew.-% | Erweichungs-Temperatur, °C | Viskosität mPa.s,130°C | Härte[a] |
| 100 | - | 0 | 55-65 | 500 | -- |
| 85 | 3 | 15 | 60-70 | | - |
| 50 | 3 | 50 | 65-75 | 1080 | + |
| 25 | 3 | 75 | 80-90 | | + + |
| 85 | 4 | 15 | 60-70 | | -- |
| 50 | 4 | 50 | 75-80 | | + /- |
| 75 | 7 | 25 | 80-90 | | + /- |
| 50 | 7 | 50 | 125-135 | | + + |
| - | 3 | 100 | 80-100 | 6000 | + + |
| - | 4 | 100 | 80-100 | | + + |
| - | 7 | 100 | 220 | | + + |

[a]Härteskala: + +: sehr hart, spröde, +: hart, wenig plastisch, + /-: hart, plastisch, -: weich, --: sehr weich.

Tabelle 6

| Zusammensetzung der Formmassen | | | | |
|---|---|---|---|---|
| Bsp. Nr. | $Al_2O_3$ g | Siliconharz | | Sonstiges |
| | | Nr. | g | |
| 22 | 276 | 1 | 17,5 | 12,5 g Montanwachs |
| | | 3 | 17,5 | 2,5 g Stearinsäureamid |
| 23 | 276 | 1 | 17,5 | 12,5 g Montanwachs |
| | | 4 | 17,5 | 2,5 g Stearinsäureamid |
| 24 | 276 | 1 | 29,75 | 12,5 g Montanwachs |
| | | 7 | 5,25 | 2,5 g Stearinsäureamid |
| 25 | 414 | 1 | 27,4 | 18,25 g Montanwachs |
| | | 7 | 27,4 | |
| 26 | 414 | 1 | 18,3 | 36,5 g Montanwachs |
| | | 7 | 18,3 | |

EP 0 593 548 B1

Tabelle 7

| Ergebnisse des Brennens | | | | |
|---|---|---|---|---|
| Bsp. Nr. | Größe mm | Brenndauer[a] h | Gew.-% -Verlust | Aussehen |
| 21 | 13 x 2 | 16:20[a] | 7,2 | fehlerfrei |
| 22 | 13 x 2 | 16:20 | 7,2 | fehlerfrei |
| 23 | 13 x 2 | 16:20 | 7,3 | fehlerfrei |
| 24 | 13 x 2 | 16:20 | 7,3 | fehlerfrei |
| 25 | 13 x 2 | 11:00[b] | 5,8 | fehlerfrei |
| 26 | 13 x 2 | 11:00 | 9,4 | fehlerfrei |

[a]Aufheizprogramm: 1°C/Min 25-100°C, 0,5°C/Min 100-400°C, 1°C/Min 400-600°C und 5°C/Min 600-1.000°C.

[b]Aufheizprogramm: 1°C/Min 25-600°C, 4°C/Min 600-1000°C.

Beispiel 27

Herstellung einer Formmasse aus Porzellanpulver

Wie im Beispiel 21 wurden 39,1 g einer 64 %igen Harzlösung (25 g Harz) aus Beispiel 1, 10 g Montanwachs, 10 g Copolymerwachs und 5 g Stearinsäureamid mit 253 g Porzellanpulver vermischt und insgesamt 1 Stunde geknetet. Man erhält eine plastische Formmasse mit guten Fließeigenschaften, die beim Abkühlen fest wird. Der Pulver-Volumenanteil der Formmasse berechnet sich zu etwa 62 %.

Die Formmasse hat eine Dichte von 1,97 g/cm$^3$ und weist eine Viskosität von 700 Pa.s bei einer Schergeschwindigkeit von 100 s$^{-1}$ und 350 Pa.s bei 700 s$^{-1}$ auf. Die Formmasse wurde in einer Spritzgußmaschine bei einer Massentemperatur von 130-140°C, einer Formtemperatur von 35°C und einem Druck von 900 bar zu 80x20x5 mm großen Stäben gespritzt. Die Formteile waren frei von makroskopischen Fehlern. Die Formteile konnten in weniger als 30 Stunden fehlerfrei gebrannt werden. Der Gewichtsverlust betrug 17,7 %.

**Patentansprüche**

**1.** Thermoplastische Formmasse, enthaltend mindestens ein thermoplastisches Siliconharz, mit einer Erweichungstemperatur zwischen 30 und 200°C der durchschnittlichen Formel

$$R^1_a Si(OH)_b (OR^2)_c O_{(4-a-b-c)/2} \qquad (I)$$

wobei
    a    Werte im Bereich von 0,95 bis 1,5 und
    c    Werte im Bereich von 0 bis 0,2 annimmt,
die Summe (a + b + c) 1,05 bis 1,7 beträgt,
die Summe (b + c) maximal 0,3 beträgt,
    $R^1$    einen oder mehrere der Reste H, $C_1$-$C_{18}$-Alkyl, Allyl, Vinyl oder Phenyl bezeichnet,
    $R^2$    einen oder mehrere der organischen Reste $C_1$-$C_{18}$-Alkyl bezeichnet,
wobei mindestens 70% der Reste $R^1$ und $R^2$ Methylgruppen sind
und mindestens ein sinterfähiges Pulver.

**2.** Thermoplastische Formmasse nach Anspruch 1, enthaltend zusätzlich ein weiteres thermoplastisches Bindemittel auf organischer Basis oder auf Basis eines Copolymeren mit Siloxanen.

**3.** Thermoplastische Formmasse nach Anspruch 2, dadurch gekennzeichnet, daß die Bindemittel auf organischer Basis organische Polymere oder Wachse sind, die eine Erweichungstemperatur zwischen 40 und 200°C besitzen.

**4.** Thermoplastische Formmasse nach einem der Ansprüche 1 bis 3, enthaltend mindestens zusätzlich ein Sinterhilfsmittel, Fließ- und Trennhilfsmittel.

14

**5.** Thermoplastische Formmasse nach einem der Ansprüche 1 bis 4, dadurch gekennzeichnet, daß das thermoplastische Siliconharz eine Mischung aus mindestens 2 Siliconharzen ist, wobei das erste Siliconharz eine Erweichungstemperatur von 30 bis 120°C und das weitere Siliconharz eine Erweichungstemperatur von mindestens 60°C aufweist und die Differenz der Erweichungstemperaturen mindestens 20°C beträgt.

**6.** Thermoplastische Formmasse nach einem der Ansprüche 1 bis 5, dadurch gekennzeichnet, daß diese 50 bis 70 Vol-% eines sinterfähigen Pulvers und 30 bis 50 Vol-% eines thermoplastischen Siliconharzes und Hilfsstoffe enthält.

**7.** Verfahren zur Herstellung thermoplastischer Formmassen nach einem der Ansprüche 1 bis 6, durch Vermischen sinterfähiger Pulver mit Bindemitteln, Sinterhilfsmitteln und weiteren Hilfsmitteln, bei Temperaturen oberhalb der Erweichungstemperatur des Siliconharzes beziehungsweise Siliconharzgemisches.

**8.** Verfahren zur Herstellung von Sinterkörpern, dadurch gekennzeichnet, daß man thermoplastische Formmassen nach einem der Ansprüche 1 bis 6 nach Formgebung mittels Spritzgießen, Extrudieren oder Warmpressen zunächst bei einer Temperatur zwischen 200°C und 1000°C brennt und dann bei Temperaturen zwischen 1000 und 2000°C sintert.

**Claims**

**1.** Thermoplastic moulding compound, containing at least one thermoplastic silicone resin, with a softening temperature of between 30 and 200 °C, of the average formula

$$R^1{}_a Si(OH)_b(OR^2)_c O_{(4-a-b-c)/2} \qquad (I)$$

wherein
  a   assumes values in the range of 0.95 to 1.5 and
  c   values in the range of 0 to 0.2,
the sum $(a + b + c)$ is 1.05 to 1.7,
the sum $(b + c)$ is at most 0.3,
  $R^1$   denotes one or more of the groups H, $C_1$ to $C_{18}$-alkyl, allyl, vinyl or phenyl,
  $R^2$   denotes one or more of the organic groups $C_1$ to $C_{18}$-alkyl,
at least 70 % of the groups $R^1$ and $R^2$ being methyl groups,
and at least one sinterable powder.

**2.** Thermoplastic moulding compound according to Claim 1, containing in addition another thermoplastic binder that is organic-based or based on a copolymer with siloxanes.

**3.** Thermoplastic moulding compound according to Claim 2, characterized in that the organic-based binders are organic polymers or waxes that have a softening temperature of between 40 and 200 °C.

**4.** Thermoplastic moulding compound according to one of Claims 1 to 3, containing at least in addition a sintering auxiliary, flow aid and mould release agent.

**5.** Thermoplastic moulding compound according to one of Claims 1 to 4, characterized in that the thermoplastic silicone resin is a mixture of at least 2 silicone resins, wherein the first silicone resin has a softening temperature of 30 to 120 °C and the other silicone resin has a softening temperature of at least 60 °C and the difference between the softening temperatures is at least 20 °C.

**6.** Thermoplastic moulding compound according to one of Claims 1 to 5, characterized in that it contains 50 to 70 vol% of a sinterable powder and 30 to 50 vol% of a thermoplastic silicone resin and auxiliary materials.

**7.** Process for the manufacture of thermoplastic moulding compounds according to one of Claims 1 to 6 by mixing sinterable powders with binders, sintering auxiliaries and other aids at temperatures above the softening temperature of the silicone resin or silicone resin mixture.

8. Process for the manufacture of sintered compacts, characterized in that thermoplastic moulding compounds according to one of Claims 1 to 6, after shaping by means of injection moulding, extrusion or hot pressing, are initially fired at a temperature between 200 °C and 1000 °C and then sintered at temperatures between 1000 and 2000 °C.

**Revendications**

1. Matière à mouler thermoplastique contenant au moins une résine de silicone thermoplastique dont la température de ramollissement est de 30 à 200 °C et qui répond à la formule moyenne

$$R^1_a \, Si(OH)_b(OR^2)_c O_{(4-a-b-c)/2} \qquad (I)$$

dans laquelle
   a    a des valeurs de 0,95 à 1,5 et
   c    a des valeurs de 0 à 0,2,
la somme (a + b + c) va de 1,05 à 1,7,
la somme (b + c) est égale à 0,3 au maximum,
chacun des symboles $R^1$ représente H, un groupe alkyle en $C_1$-$C_{18}$, allyle, vinyle ou phényle,
chacun des symboles $R^2$ représente un groupe alkyle en $C_1$-$C_{18}$,
au moins 70 % des substituants $R^1$ et $R^2$ consistant en groupes méthyle,
et au moins une poudre frittable.

2. Matière à mouler thermoplastique selon revendication 1 contenant en outre un autre liant thermoplastique à base organique ou à base d'un copolymère de siloxane.

3. Matière à mouler thermoplastique selon revendication 2, caractérisée en ce que les liants à base organique sont des polymères ou cires organiques ayant une température de ramollissement de 40 à 200 °C.

4. Matière à mouler thermoplastique selon une des revendications 1 à 3, contenant en outre au moins un composant choisi parmi les produits auxiliaires de frittage, les agents fluidifiants et les agents de démoulage.

5. Matière à mouler thermoplastique selon une des revendications 1 à 4, caractérisée en ce que la résine de silicone thermoplastique consiste en un mélange d'au moins deux résines de silicones, la première ayant une température de ramollissement de 30 à 120 °C et l'autre une température de ramollissement d'au moins 60 °C, la différence des températures de ramollissement étant d'au moins 20 °C.

6. Matière à mouler thermoplastique selon une des revendications 1 à 5, caractérisée en ce qu'elle contient de 50 à 70 % en volume d'une poudre frittable et de 30 à 50 % en volume d'une résine de silicone thermoplastique et de produits auxiliaires.

7. Procédé de préparation de matières à mouler thermoplastiques selon une des revendications 1 à 6, par mélange de poudres frittables avec des liants, des produits auxiliaires de frittage et d'autres produits auxiliaires à des températures supérieures à la température de ramollissement de la résine de silicone ou du mélange de résines de silicones.

8. Procédé de préparation de corps frittés, caractérisé en ce que, après façonnage des matières à mouler thermoplastiques selon une des revendications 1 à 6 par moulage par injection, extrusion ou compression à chaud, on les cuit d'abord à une température de 200 à 1 000 °C puis on les fritte à des températures de 1 000 à 2 000 °C.